Europäisches Patentamt

European Patent Office

Office européen des brevets

(11) Veröffentlichungsnummer: **0 072 487**
**A1**

(12) **EUROPÄISCHE PATENTANMELDUNG**

(21) Anmeldenummer: 82106978.8

(22) Anmeldetag: 02.08.82

(51) Int. Cl.³: **A 61 C 3/02**
**A 61 C 17/02**

(30) Priorität: 14.08.81 DE 3132291

(43) Veröffentlichungstag der Anmeldung:
23.02.83 Patentblatt 83/8

(84) Benannte Vertragsstaaten:
DE FR GB IT

(71) Anmelder: SIEMENS AKTIENGESELLSCHAFT
Berlin und München Wittelsbacherplatz 2
D-8000 München 2(DE)

(72) Erfinder: Landgraf, Hermann
Donaustrasse 1
D-6148 Heppenheim(DE)

(72) Erfinder: Hain, Josef
Berliner Strasse 3
D-6941 Laudenbach(DE)

(54) Gerät zur Bearbeitung, insbesondere Reinigung, der Oberfläche von Teilen, insbesondere von Zähnen.

㉝ Die Erfindung bezieht sich auf ein Gerät zur Bearbeitung, insbesondere Reinigung, der Oberfläche von Teilen, insbesondere von Zähnen.

Das Gerät enthält eine Düsenanordnung (3) mit voneinander getrennten Kanälen (6, 7) und Austrittsöffnungen für Wasser (W) und ein mit Schleifmitteln versetztes Trägergas (SG). Um eine optimale Abtragwirkung bei geringem Schleifmittelverbrauch zu bekommen und die Gefahr einer Verstopfung der Kanäle zu vermeiden, ist erfindungsgemäß ein weiterer Kanal (5) zur Zufuhr von schleifmittelfreiem Gas (G) vorgesehen, der in eine Kammer (10) mündet, durch die das Trägergas (SG) vor seinem Austritt strömt. Das im weiteren Kanal (5) geführte Gas (G) wird mit im Vergleich zum Trägergas (SG) höherer Beschleunigungsenergie (Strömungsgeschwindigkeit) in die Kammer (10) geleitet.

FIG 2

FIG 4

SIEMENS AKTIENGESELLSCHAFT
Berlin und München

Unser Zeichen
VPA 81 P 5078 E

Gerät zur Bearbeitung, insbesondere Reinigung, der Oberfläche von Teilen, insbesondere von Zähnen

Die Erfindung bezieht sich auf ein Gerät zur Bearbeitung, insbesondere Renigung, der Oberfläche von Teilen, insbesondere von Zähnen, mittels eines mit Schleifmittel versetzten Trägergases und unter Zuführung von Wasser, mit einer Düsenanordnung, die voneinander getrennte Kanäle und Austrittsöffnungen für Wasser und Trägergas enthält.

Geräte dieser Art werden unter anderem zur Beseitigung von Plaque oder zum Mattieren von Zahnbrücken verwendet. Als abrasive Schleifmittel kommen verschiedene Materialien in Frage; für eine prophylaktische Zahnbehandlung im Patientenmund, beispielsweise zum Entfernen von Zahnbelägen, haben sich wasserlösliche Materialien (z.B. Soda) als vorteilhaft erwiesen.

Bei einem bekannten solchen Gerät (US-PS 41 74 571) befindet sich am freien Ende eines Handgriffes eine Düsenanordnung, der einerseits ein mit trockenen Schleifmitteln versetztes Trägergas (Luft) und andererseits über einen separaten Zufuhrkanal Wasser zugeführt wird. Der Wasseraustrittskanal umgibt dabei konzentrisch die Austrittsöffnung des für Schleifmittel vorgesehenen Luftkanals und steht gegen letzterem etwas vor.

Die Praxis hat einerseits gezeigt, daß Geräte dieser Bauart leicht zu einer Verstopfung der Kanäle bzw. zu einer Verkrustung der Kanäle an der Austrittsstelle neigen, insbesondere dann, wenn die Austrittsöffnung mit der Bearbeitungsfläche, dem Zahn, versehentlich in Berührung

Rp 5 Bd / 11.08.1981

kommt. Durch den dabei entstehenden Stau kann es vor Austritt aus der Düse zu einem Vermischen des trockenen Schleifmittels mit Wasser kommen, mit der Folge, daß insbesondere bei längeren Stillstandszeiten das Schleifmittel an den Wandungen der Düse ankrustet.

Andererseits hat sich gezeigt, daß die Abtragwirkung bzw. der Reinigungseffekt bei dem bekannten Gerät unter Zugrundelegung eines angemessenen, nicht zu hohen Gas- und Schleifmittelverbrauches nicht zufriedenstellend ist. Um einen vernünftigen Transport des Schleifmittels zu erzielen und ein Verstopfen des Schleifmittelkanals zu verhindern, sind an sich relativ große Kanal- und Düsenquerschnitte erforderlich. Eine zufriedenstellende abrasive Wirkung wäre bei dem bekannten Geräten nur mit relativ hohem Gasdruck und großer Gasmenge bzw. bei einem vertretbaren Gasverbrauch mit stark erhöhter Schleifmittelzugabe zu erzielen. Letzteres hätte eine schlechtere Sicht auf die Bearbeitungsfläche sowie eine zwangsläufig notwendige Erhöhung der Absaugmenge während einer Patientenbehandlung zur Folge.

Aufgabe der vorliegenden Erfindung ist es, ein Gerät der eingangs genannten Gattung dahingehend zu verbessern, daß bei relativ geringem Schleifmittel- und Trägergasverbrauch eine optimale Abtragwirkung erzielt und die Gefahr von Verstopfungen der schleifmittelführenden Kanäle und Düsen wirksam vermieden werden kann.

Die gestellte Aufgabe wird bei einem Gerät der eingangs genannten Gattung gemäß der Erfindung dadurch gelöst, daß ein weiterer Kanal zur Zufuhr von schleifmittelfreiem Gas vorgesehen ist, der in eine Kammer mündet, durch die das Trägergas vor seinem Austritt strömt und daß das im weiteren Kanal geführte Gas mit im Vergleich zum Trägergas höherer Beschleunigungsenergie in die Kammer geleitet wird.

- 3 -        VPA 81 P 5078 E

Vorteilhafte Ausgestaltungen und Weiterbildungen der Erfindung sind in den Unteransprüchen enthalten.

Dadurch, daß getrennt von dem Trägergas ein zusätzlicher Kanal mit schleifmittelfreiem Gas vorgesehen ist, ist eine Optimierung der beiden Gasleitungen möglich. Um die bei diesen relativ großen Querschnitten verhältnismäßig langsame Strömung des Schleifmittelträgergases zu beschleunigen, ist das zusätzliche schleifmittelfreie Gas auf großen Energieinhalt abgestellt, der dem Schleifmittel vor Austritt aus der Düse zugeführt wird, um so eine optimale Abtragung von Material auf der Zahnoberfläche sicherzustellen. Wie nachstehend noch näher erläutert, wird durch den Aufbau der Düse in der Kammer, in der das Schleifmittelträgergas durch das schleifmittelfreie Gas beschleunigt wird, ein relativer Unterdruck erzeugt. Es entsteht dadurch ein Absaugeffekt, der die Verstopfungsgefahr weiter vermindert. Ein weiterer Vorteil der Düsenanordnung liegt darin, daß das Wasser in Form eines Ringmantels das Schleifmittel umgibt und diesem außerhalb des Schleifmittelaustritts beigemischt wird. Dadurch wird ein mögliches Stauben eingedämmt. Durch die etwas zurückgesetzte Wasseraustrittsstelle, wie gemäß einer vorteilhaften Ausgestaltung der Erfindung vorgeschlagen ist, wird auch die Gefahr einer Verkrustung der Kanäle bei Berührung der Schleifmittelaustrittsdüse mit der zu behandelnden Oberfläche vermieden.

Weitere Vorteile ergeben sich aus der Beschreibung eines Ausführungsbeispieles der Erfindung anhand der Zeichnungen. Es zeigen:

Fig. 1 ein zahnärztliches Gerät der erfindungsgemäßen Art,

Fig. 2 die Düsenanordnung des Gerätes nach Fig. 1 im Längsschnitt,

Fig. 3 einen Teil der Düsenanordnung in einer gegenüber Fig. 2 um 90° gedrehten Position,

Fig. 4 und 5 die Düsenanordnung nach Fig. 2 in den zwei stirnseitigen Draufsichten.

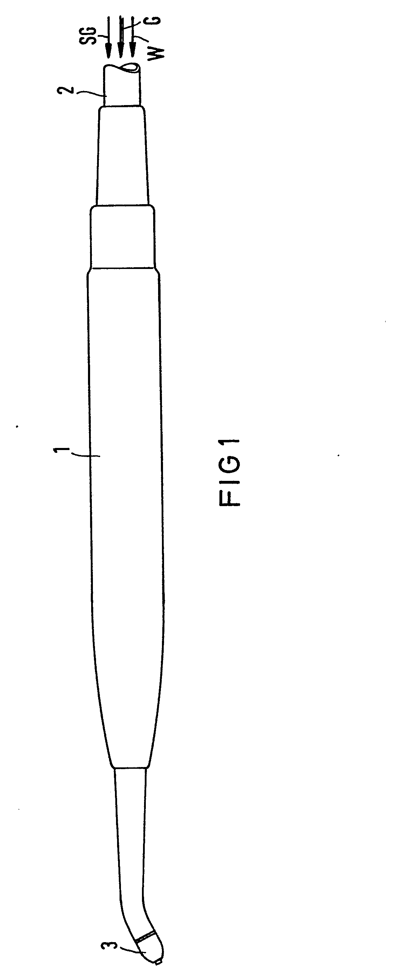

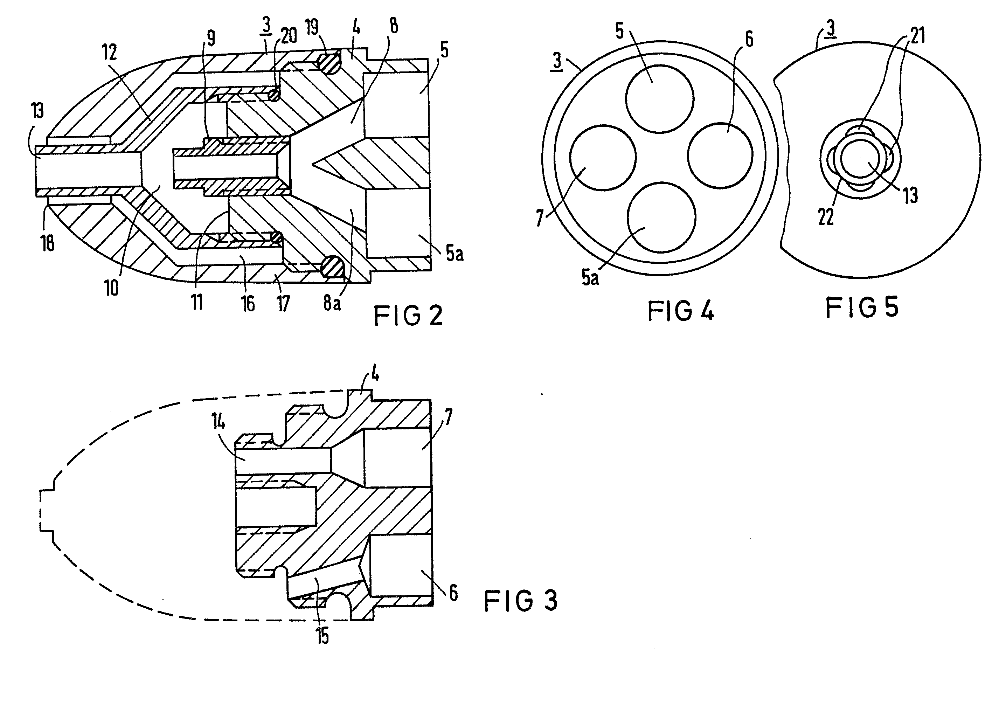

Die Fig. 1 zeigt in einer schematischen Darstellung ein zahnärztliches Handinstrument mit einem Griffkörper 1, an dem ein Versorgungsschlauch 2 angeschlossen ist, über den die Medien Wasser (W), ein mit Schleifmitteln versetztes Trägergas (SG) und ein zusätzliches, schleifmittelfreies Gas (G) zugeführt werden. Die drei Medien führen in bekannter Weise über nicht näher dargestellte Kanäle zu einer Düsenanordnung 3, die in Fig. 2 im Längsschnitt dargestellt ist.

Die Düsenanordnung 3 enthält einen rotationssymmetrisch ausgebildeten Grundkörper 4, in dem (siehe Fig. 4) zwei Kanäle 5, 5a zur Zufuhr von schleifmittelfreiem Gas (G), ein Wasserkanal 6 sowie ein weiterer Kanal 7, über den das mit Schleifmittel versetzte Trägergas (SG) zugeführt wird, münden. Die beiden Kanäle 5, 5a können entweder eine gemeinsame oder auch getrennte Zufuhrleitungen haben. Sie münden über schräg verlaufende Kanäle 8, 8a zu einer mit 9 bezeichneten Beschleunigungsdüse, die wiederum in eine Kammer 10 mündet, welche einerseits durch eine stirnseitige Fläche 11 des Grundkörpers 4 und andererseits durch ein konzentrisch angeordnetes, trichterförmiges Teil 12 gebildet wird, welches einen Austrittskanal 13 sowohl für das mit Schleifmittel versetzte Trägergas (SG) als auch für das schleifmittelfreie Gas (G) enthält.

An den Zufuhrkanal 7 für das mit Schleifmittel versetzte Trägergas (SG) schließt sich ein direkt in die Kammer 10 mündender Kanal 14 mit im Vergleich zur Beschleunigungsdüse 9 größerem Querschnitt an (Fig. 3). Der Wasserkanal 6 führt über eine Schrägbohrung 15 in einen Hohlringraum 16 (Fig. 2), der einerseits gebildet ist durch das trichterförmige Teil 12 und andererseits durch eine konzentrisch dazu am Grundkörper 4 angeordnete Hülse 17. Die Hülse 17 ist mit ihrer Vorderkante 18 gegenüber der Vorderkante des Austrittskanals 13 etwas zurückgesetzt, wodurch bei einem versehentlichen Verschließen des Austrittskanals 13, z.B. durch Berührung mit der zu behandelnden Oberfläche, wirksam vermieden wird, daß das austretende Wasser direkt in den Austrittskanal 13 gelangen und dort zu einer Verkrustung des Schleifmittels führen kann. Außerdem entsteht durch die Düse 9 nach dem Abschalten der Schleifmittelförderung ein Saugeffekt, der die Schleifmittelförderleitung im Bereich der Düsenanordnung von Schleifmittelresten befreit. Eine Verstopfung der Kanäle wird dadurch wirksam verhindert.

Sowohl die Beschleunigungsdüse 9 als auch das trichterförmige Teil 12 und die Hülse 17 sind am Grundkörper 4 angeschraubt, also mit diesem leicht lösbar verbunden und durch entsprechende O-Ring-Dichtungen 19, 20 gegeneinander abgedichtet. Durch die Zerlegbarkeit der Düse ist es möglich, im Bedarfsfalle beschädigte Teile problemlos auszutauschen. Durch die beschriebene Düsenanordnung wird folgende Wirkung erzielt:

Das mit Schleifmittel, z.B. Soda, versetzte Trägergas wird über den Leitungskanal 7 und den weiteren Kanal 14 mit einem Druck von etwa 1 bis 1,5 bar in die Kammer 10 geleitet. Über die Kanäle 5, 5a wird schleifmittelfreies Gas, z.B. Luft, mit einem Druck von etwa 2 bis 2,7 bar durch die Beschleunigungsdüse 9 geleitet. Bei einem Düsendurchmesser von etwa 0,6 mm ergibt sich ein Durch-fluß von etwa 10 l pro Minute. Durch das Einleiten dieser mit relativ hoher Beschleunigungsenergie versehenen schleifmittelfreien Luft wird das mit Schleifmittel durchsetzte Luftgemisch in der Kammer 10 stark beschleunigt und tritt mit relativ hoher Energie aus dem Austrittskanal 13 aus. Die Beschleunigungsdüse 9 erzeugt dabei einen Freistrahl, dessen Kern sich in Richtung Luftaustritt am Kanal 13 fortbildet und der nach Art einer Freistrahldüse in der Kammer 10 einen relativen Unterdruck erzeugt, der zu einer besonders günstigen Förderung des Schleifmittels beiträgt. Es entsteht dadurch ein gewisser Absaugeffekt für das Schleifmittel, der eine Verstopfungsgefahr weiter mindert. Besonders günstig ist es, wenn das Schleifmittel über einen schräg derart angeordneten Zufuhrkanal (14) in die trichterförmige Kammer 10 geleitet wird, daß das Schleifmittel-Gasgemisch in eine rotierende Bewegung versetzt und so gleichmäßig dem Beschleunigungsgas aus der Beschleunigungsdüse 9 zugemischt wird.

Das Wasser wird in dem Ringraum 16 zur Düsenspitze geführt und außerhalb des Austrittskanals 13 dem Schleifmittel beigemischt, wobei das Wasser das austretende Schleifmittel ummantelt, wodurch ein Stauben weitgehend vermieden wird. Wie aus Fig. 5 ersichtlich ist, tritt das Wasser aus vier Düsen 21 aus, die durch Ausnehmungen in der Hülse 17 und Abstützung von Stegen 22 an der Außenwandung des Austrittskanals 13 gebildet werden.

5 Figuren
10 Patentansprüche

Patentansprüche

1. Gerät zur Bearbeitung, insbesondere Reinigung, der Oberfläche von Teilen, insbesondere von Zähnen, mittels eines mit Schleifmittel versetzten Trägergases (SG) und unter Zuführung von Wasser (W), mit einer Düsenanordnung (3), die voneinander getrennte Kanäle (6, 7) und Austrittsöffnungen für Wasser und Trägergas enthält, d a - d u r c h  g e k e n n z e i c h n e t, daß ein weiterer Kanal (5) zur Zufuhr von schleifmittelfreiem Gas (G) vorgesehen ist, der in eine Kammer (10) mündet, durch die das Trägergas (SG) vor seinem Austritt strömt, und daß das im weiteren Kanal (5) geführte Gas (G) mit im Vergleich zum Trägergas (SG) höherer Beschleunigungsenergie (Strömungsgeschwindigkeit) in die Kammer (10) geleitet wird.

2. Gerät nach Anspruch 1, d a d u r c h  g e k e n n - z e i c h n e t, daß in die Kammer (10) eine mit dem weiteren Kanal (5) verbundene Beschleunigungsdüse (9) angeordnet ist, dergestalt, daß das schleifmittelfreie Gas (G) einen Freistrahl zur Austrittsöffnung eines Austrittskanals (13) der Kammer (10) hin bildet, und im Strahlrand die Zufuhr des Trägergases (SG) erfolgt.

3. Gerät nach Anspruch 2, d a d u r c h  g e k e n n - z e i c h n e t, daß die Kammer (10) trichterförmig ausgebildet ist und im Zentrum die Beschleunigungsdüse (9) angeordnet ist.

4. Gerät nach einem der Ansprüche 1 bis 3, d a d u r c h  g e k e n n z e i c h n e t,  daß das Trägergas (SG) über einen derart schräg in die Kammer (10) mündenden Kanal (14) zugeführt wird, daß das Schleifmittel-Gasgemisch in eine rotierende Bewegung versetzt und so gleichmäßig dem schleifmittelfreien Gas (G) aus der Beschleunigungsdüse (9) zugemischt wird.

5. Gerät nach einem der Ansprüche 1 bis 4, d a - d u r c h   g e k e n n z e i c h n e t, daß der Wasseraustrittskanal (16) konzentrisch zum Austrittskanal (13) des Trägergases (SG) angeordnet ist.

6. Gerät nach Anspruch 5, d a d u r c h   g e - k e n n z e i c h n e t, daß die Austrittsöffnung des Wasseraustrittskanals (16) gegenüber der Austrittsöffnung des Austrittskanals (13) für das Trägergas (SG) und das schleifmittelfreie Gas (G) etwas zurückgesetzt angeordnet ist.

7. Gerät nach einem der Ansprüche 1 bis 6, d a d u r c h g e k e n n z e i c h n e t, daß die Hülse (17) sich im Bereich der Vorderkante (18) des trichterförmigen Teils (12) an diesem mittels Stege (22) unter Bildung von Austrittsöffnungen (21) für das Wasser abstützt.

8. Gerät nach einem der Ansprüche 1 bis 7, d a d u r c h g e k e n n z e i c h n e t, daß die Düsenanordnung (3) einen rotationssymmetrischen Grundkörper (4) mit mindestens einem Zufuhrkanal (7) für das mit Schleifmittel versetzte Trägergas (SG) und (5) für das schleifmittelfreie Gas (G) und einen Zufuhrkanal (6) für das Wasser (W) enthält, daß zentrisch zum Grundkörper (4) eine einen Freistrahl erzeugende Beschleunigungsdüse (9) angeordnet ist, daß ferner konzentrisch zur Beschleunigungsdüse (9) ein mit einer Fläche (11) des Grundkörpers (4) die Kammer (10) bildender und den Austrittskanal (13) enthaltender trichterförmiger Aufsatzteil (12) gehaltert ist, und daß konzentrisch zu dem Aufsatzteil (12) ein weiterer, im wesentlichen den äußeren Mantel der Düsenanordnung bildender rotationssymmetrischer Teil (17) gehaltert ist, welcher zusammen mit dem Aufsatzteil (12) den Austrittskanal (16) für das Wasser bildet.

9. Gerät nach Anspruch 8, d a d u r c h   g e k e n n -
z e i c h n e t ,  daß die Teile (9, 12, 17) am Grundkörper (4) abnehmbar gehaltert, vorzugsweise angeschraubt, sind.

10. Gerät nach einem der Ansprüche 1 bis 9, d a -
d u r c h   g e k e n n z e i c h n e t ,  daß die gemeinsame Austrittsöffnung (13) für das Schleifmittelträgergas und das schleifmittelfreie Gas einen Durchmesser von 0,8 mm aufweist, daß die Beschleunigungsdüse (9) einen Durchmesser von 0,6 mm aufweist und daß der Gasdurchsatz durch diese Düse etwa 10 Liter pro Minute beträgt.

FIG 1

FIG 2

FIG 4

FIG 5

FIG 3

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE – A1 – 2 930 836 (GALLANT) <br> * Anspruch 11 * | 1 |
| D | & US – A – 4 174 571 <br> --- | |
| A | FR – A – 927 207 (STE FRANCAISE DES ACIERIES DE BLANC-MISSERON) <br> * Seite 1, Zeilen 31 bis 55 * <br> --- | 1 |
| A | DE – A1 – 2 559 036 (ABRASIVES INTERNATIONAL LTD.) <br> ---- | |

**KLASSIFIKATION DER ANMELDUNG (Int. Cl.³)**

A 61 C 3/02
A 61 C 17/02

**RECHERCHIERTE SACHGEBIETE (Int. Cl.³)**

A 61 C 3/00
A 61 C 17/00
B 24 C 5/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 08-11-1982 | SIMON |

EPA form 1503.1 06.78